(19) Europäisches Patentamt

European Patent Office

Office européen des brevets

(11) EP 0 418 844 B1

## (12) EUROPEAN PATENT SPECIFICATION

(45) Date of publication and mention
of the grant of the patent:
**03.12.1997 Bulletin 1997/49**

(51) Int Cl.6: **H04N 1/40**, H04N 1/46

(21) Application number: **90117982.0**

(22) Date of filing: **19.09.1990**

(54) **Color image information processing method**

Farbbildinformationsverarbeitungsverfahren

Procédé pour le traitement de l'information d'images en couleur

(84) Designated Contracting States:
**DE GB**

(30) Priority: **20.09.1989 JP 244734/89**

(43) Date of publication of application:
**27.03.1991 Bulletin 1991/13**

(73) Proprietor: **TOYO INK MFG. CO., LTD.**
**Chuo-ku Tokyo 104 (JP)**

(72) Inventor: **Ishida, Roh**
**Chiba-City, Chiba-Prefecture 281 (JP)**

(74) Representative: **Reichel, Wolfgang, Dipl.-Ing. et al**
**Reichel und Reichel**
**Parkstrasse 13**
**60322 Frankfurt (DE)**

(56) References cited:
**DE-A- 3 842 475        GB-A- 2 026 283**

- **PROCEEDINGS OF THE SOCIETY FOR INFORMATION DISPLAY vol. 27, no. 4, 1986, NEW YORK (US) pages 305 - 308 G.S.FAWCETT ET. AL. 'Halftoning techniques using error correction'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

(Field of the Invention)

The present invention relates to a method to binarize a multivalued halftone image, and in particular to a method for binarization when a digital multivalued color halftone image as read by a scanner is reproduced by a color output device, which can output binary values.

(Technical Background)

In the field of image processing, an ordered dither method or an error diffusion method is generally known as the technique to binarize a multivalued color image for tone reproduction.

The ordered dither method is a binarization technique, by which one pixel of an input signal as read from an original of a multivalued image corresponds to one pixel of a binarized image and the input signal is compared with the threshold table having periodicity fixedly corresponding to the position of input pixels to determine whether "to output" or "not to output".

The error diffusion method is a binarizalion technique, by which the error in binarizing one pixel of a multivalued image is dispersed and added to the surrounding input pixels according to the si7e of the coefficient of the relatively fixed coefficient matrix at the site where error has occurred.

On the other hand, a method is known in the field of printing by which color film is used as an input medium and is separated into colors, periodic dots are prepared on black-and-white sheets of film by optical method using a contact screen, printing blocks are prepared using these sheets of film and a color image is reproduced as a dot image. In the case of a dot image, the size of the dot represents the density of the image. Further, a method is known by which the contact screen is rotated at different angles for each color, and moiré and color difference due to the registering miss on each color is reduced.

Also, another method has been developed to prepare dots electronically without using an optical screen, and this has been furnished in the scanner for printing or plotter system in recent years.

(Evaluation of Background Technique)

However, the dither method is disadvantageous in that the pattern peculiar to the structure of the threshold table is generated, that it is not perfect in the reproducibility of gradation, and that moiré and color difference occur due to registration miss.

The error diffusion method has the problems in that peculiar snaky pattern which appears on the processed image, that there are problems to be solved in the image quality, and that it is still poor in gradation reproducibility.

The object of the present invention is to offer a color image information processing method by which it is possible to provide perfect gradation reproducibility and to give the processed image high image quality without a threshold table.

(Disclosure of the Invention)

To attain the above objects, the first method for color image information processing to reproduce multivalued color halftone image information by an output device capable for outputting in binary values according to this invention is characterized in that, when the object value that is a density value of a referred input pixel of a color image or the sum of the density value and the error values is binarized through comparison with the threshold, the difference between said object value and the threshold is divided into said error values in the size proportional to the coefficients in a partial matrix of the coefficient matrix having periodicity in 1-dimensional or 2-dimensional direction consisting of the elements fixedly corresponding to the position of input pixel, and said error values are added to the object values of the other input pixels distributed and fixedly corresponding to the position of said referred input pixel.

The second color image information processing method to reproduce multivalued color image information by an output device capable for outputting in binary values is characterized in that, when the object value that is a density value of an input pixel of a color image or the sum of the density value and the error values is binarized through comparison with the threshold, the difference between said object value and the threshold is divided into said error values in the size proportional to the coefficients in a partial matrix of the coefficient matrix having periodicity in 1-dimensional or 2-dimensional direction consisting of the elements fixedly corresponding to the position of input pixels, and said error values are added to the object values of the other input pixels distributed and fixedly corresponding to the position of said referred input pixel, and said coefficient matrix is rotated at a different angle for each color.

(Effect of the Invention)

First, a coefficient matrix is prepared. Each of the elements of the coefficient matrix fixedly corresponds to the position of input pixels of color image respectively. This coefficient matrix has the period with length of m in the direction of row and the period with length of n in the direction of column. It is assumed that there is a partial matrix of p rows and q columns in this coefficient matrix.

An input signal from an input pixel is binarized by the threshold, and the error respectively the difference between the input signal and the threshold is divided by the predetermined ratio and is accumulated in the input signals from the subsequent input pixels. The predetermined ratio in this case is determined in proportion to the coefficient of the element of the partial matrix of the coefficient matrix fixedly corresponding to the input pixel.

When this procedure is performed by scanning on all pixels of the color image, a binary image of monochromatic image of the color image is obtained. In each color, the coefficient matrix is rotated at a different angle for each color, and the above processing is performed.

It is possible according to this invention to offer a method for color image information processing to obtain the processed image with high quality and high gradation reproducibility without using a threshold table.

(Embodiments)

In the following, the features and other details of this invention will be described in connection with the drawings.

(Brief Description of the Drawings)

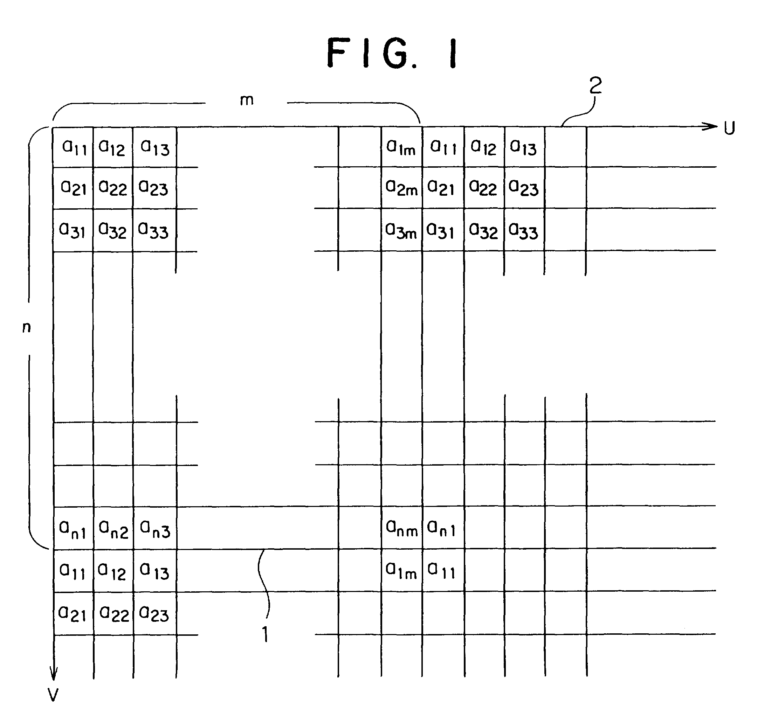

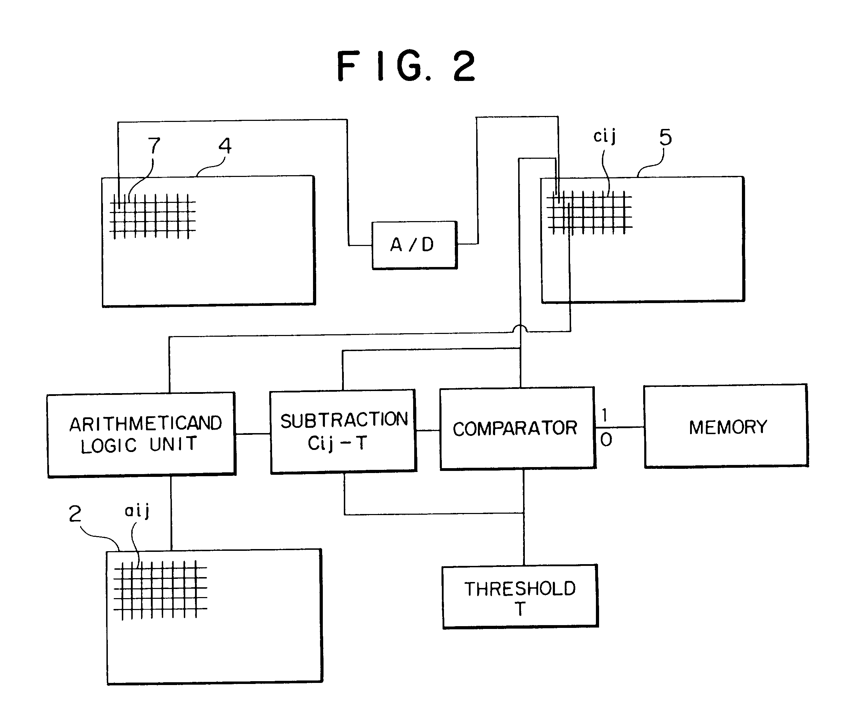

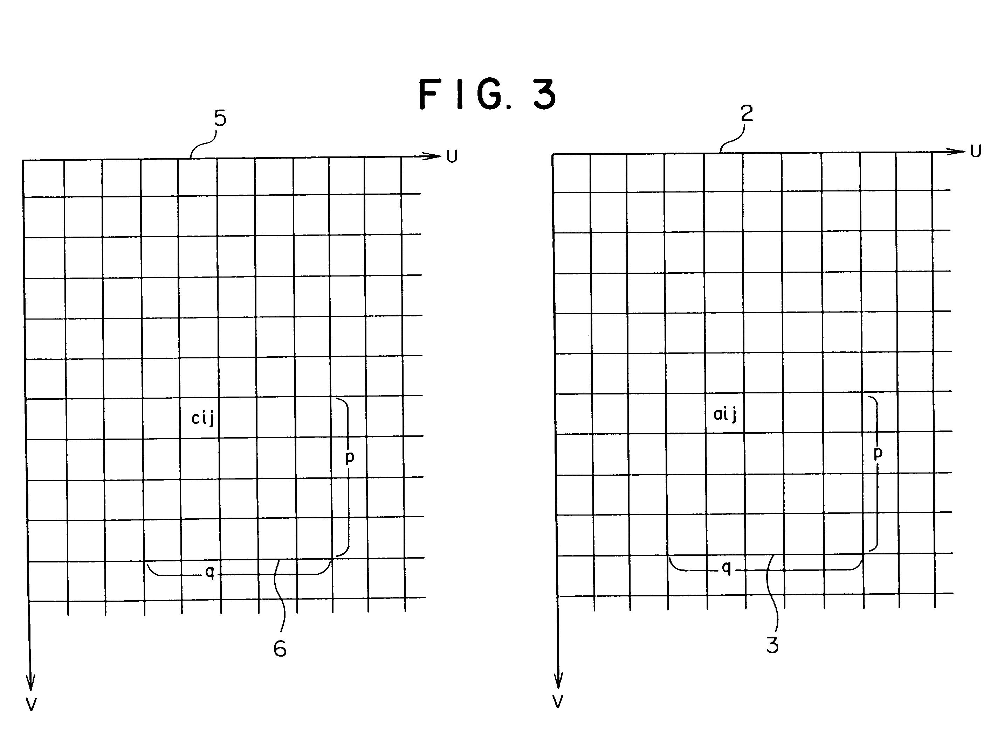

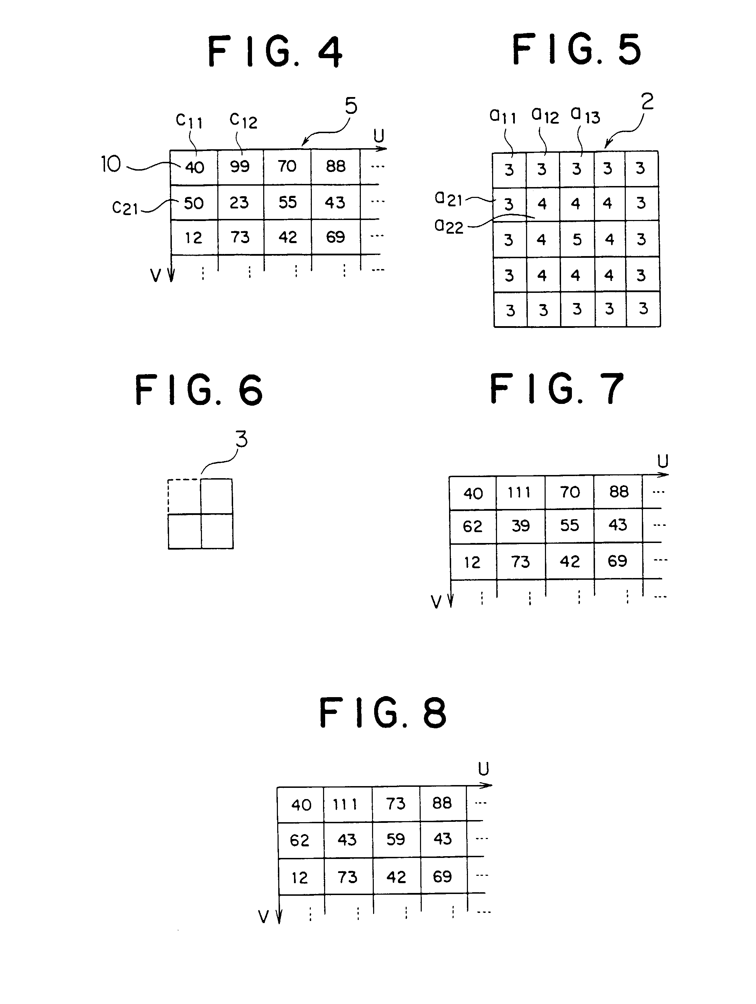

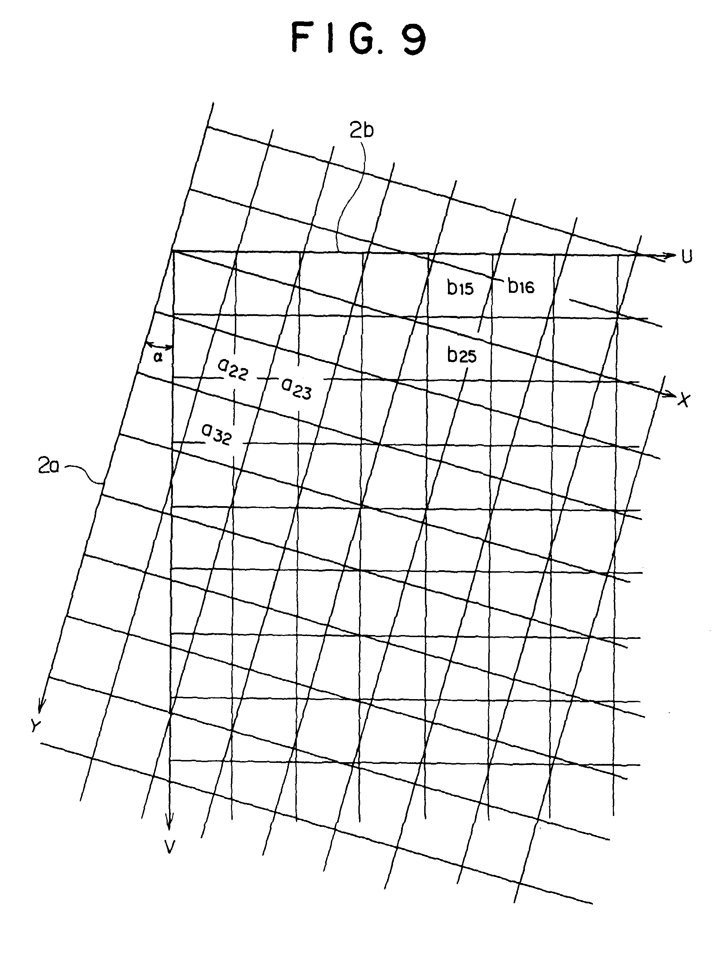

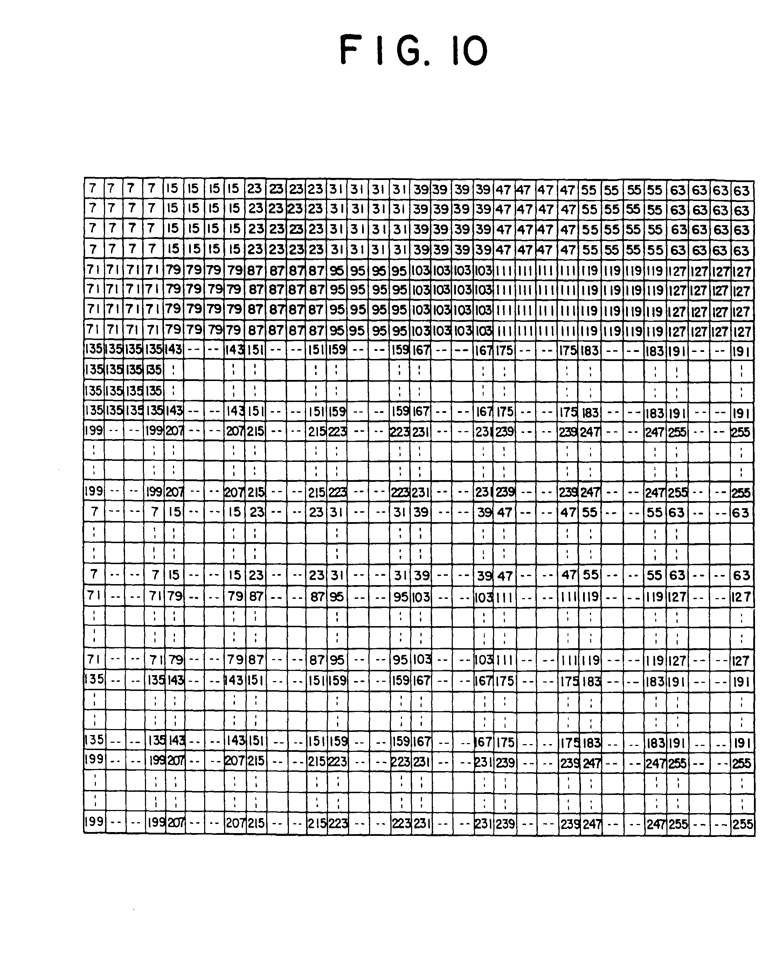

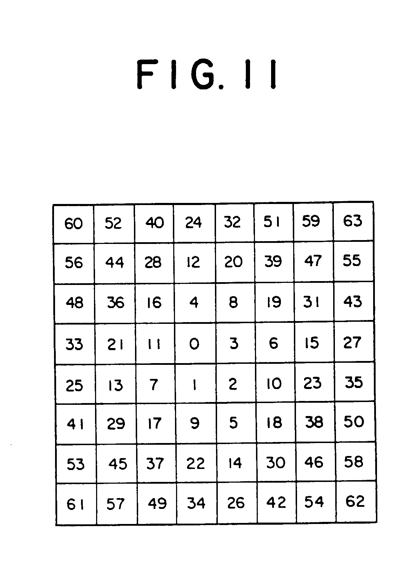

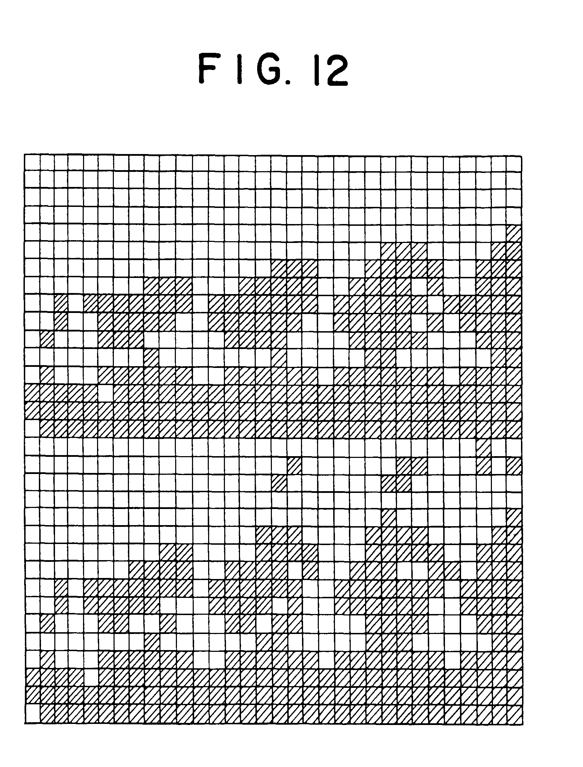

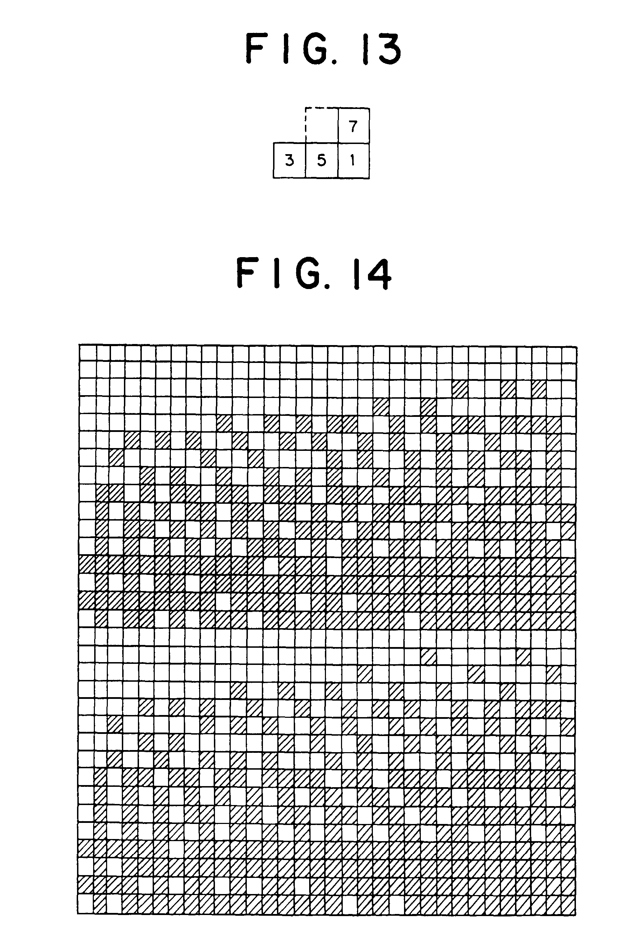

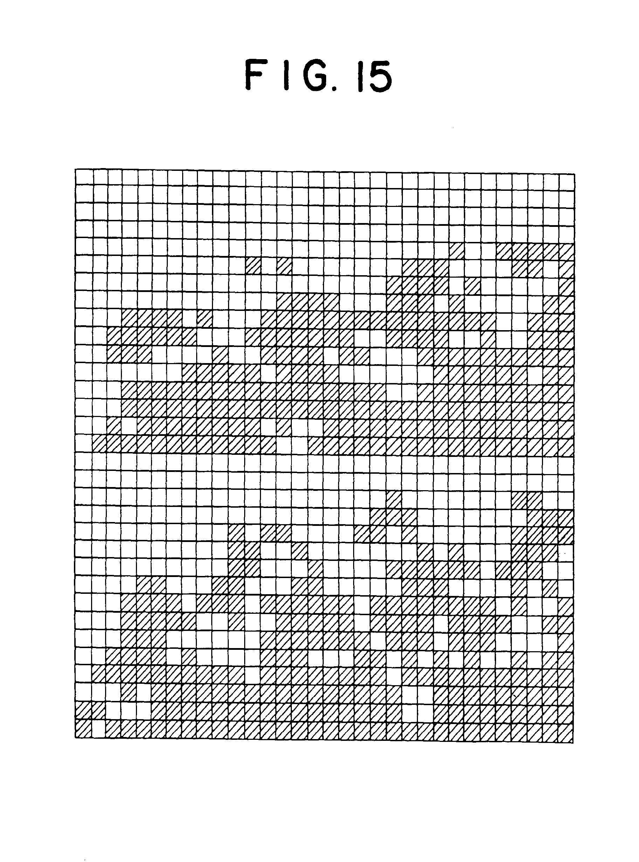

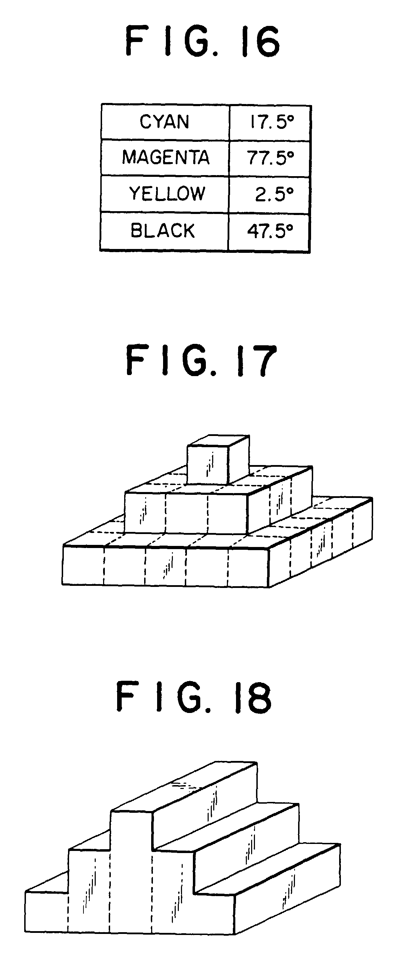

Fig. 1 is a diagram to show a coefficient matrix; Fig. 2 is a diagram to explain the process of the image processing; Fig. 3 is a graphic representation of a partial matrix in the coefficient matrix; Fig. 4 is a diagram of an example of a matrix of an object value; Fig. 5 shows another example of the coefficient matrix; Fig. 6 shows a partial matrix of the coefficient matrix; Fig. 7 is a diagram to show a matrix of an object value after the divided erros are added; Fig. 8 is a diagram to show the matrix of object value after the divided errors are added further; Fig. 9 is a diagram of the rotated coefficient matrix; Fig. 10 is a diagram to show an input value matrix for a multivalued image; Fig. 11 represents another example of the coefficient matrix; Fig. 12 is a diagram to show an output image according to the processing method of this invention; Fig. 13 is a diagram to represent an error diffusion coefficient table; Fig. 14 is a diagram to show an output image according to the error diffusion method; Fig. 15 is an output diagram to represent another output image according to this invention; Fig. 16 is a table to show the rotating angles of the coefficient matrix for each color; Fig. 17 is a perspective view of another example of the distribution of the coefficient size of the element in coefficient matrix; and Fig. 18 is a perspective view of another example of the distribution of coefficient size of the element in coefficient matrix.

(Description of the Embodiments)

First, the first embodiment of the invention is described.

In Fig. 1, the numeral 2 represents the coefficient matrix, and the coefficient matrix 2 has the period with length m in the direction of U-axis and the period with length n in the direction of V-axis. The coefficients $a_{11} \ldots a_{nm}$ in the number of $n \cdot m$ are included in one 2-dimensional period. * The elements in the coefficient matrix 2 fixedly correspond to the position of input pixel 7 in the multivalued color image 4 (Fig. 2).

Namely, 2 is a coefficient matrix in Fig. 3, and 3 represents the partial matrix of p rows and q columns of the coefficient matrix 2. The element $a_{ij}$ of the coefficient matrix 2 corresponds to the element $c_{ij}$ of the matrix of the object value in the inputted multivalued color image 4. Because the coefficient matrix 2 has periodicity, the value of $a_{ij}$ is equal to the value of $a_{i \bmod m, j \bmod n}$. For example, if the periods m = 4 and n = 3, the value of $a_{3,2}$ is equal to the value of $a_{11,8}$ because $a_{11,8} = a_{11 \bmod 4, 8 \bmod 3} = a_{3,2}$. The element $c_{ij}$ (referred pixel) of the matrix 5 of the object value fixedly corresponds to the position of the input pixel 7 of the color image 4. Here, the object value given in the element $c_{ij}$ of the matrix 5 is the input value of the input pixel 7 of the color image 4, or the input value added with the error value accumratively.

If U is the main scanning direction of the processing and V is the secondary scanning direction, in case $c_{ij} \geq T$, the binarized signal is turned to "to output" when the value of $c_{ij}$ is binarized in comparison with the threshold T. Thus, the error of $e = c_{ij} - T$ is generated. In case $c_{ij} < T$, the binarized signal is turned to "not to output", and the error $e = c_{ij}$ is generated.

This error e is dispersed and added to each element of the partial matrix 6 of p rows and q columns of the object value matrix 5 of the input pixel, corresponding to the range of partial matrix 3 of p rows and q columns of the coefficient matrix 2 including $a_{ij}$ in proportion to the coefficient $a_{wz}$ (except $a_{ik}$ with $k \leq j$, of the values where w is changed by taking a natural number from i to i + p - 1, and z is changed to each value of w by setting the natural number $\alpha$ which is lower than q and by taking natural number from j $-\alpha$ + 1 to j $-\alpha$ + q.)

By performing this processing to all input pixels by moving the referred pixel in the order of main scanning and the secondary scanning, the image in binary values can be obtained. There is no specific relation between p, q and n, m.

Next, the process to diffuse the error by the above processing is described in connection with the diagrams as an example. However, the claims of the present invention are not limited to the size of matrix and numerical values used in this description. In Fig. 4,5 represents the matrix of the object value of the inputted multivalued color image, and it is the matrix of the input value of the pixel of a color image before the errors are added and the numeral 10 denotes the site where error occurred (referred pixel). As shown in Fig. 5, it is supposed that the coefficient matrix 2 is a coefficient matrix of 5 rows and 5 columns, and the partial matrix 3 is the matrix with 2 rows and 2 columns as shown in Fig. 6. It is supposed that the range of the input pixel value is 0 - 100, and that

---

* In the following cases where subscript commas are not necessary for clarification they have been omitted, i.e. $a_{1,1}$; $c_{i,j}$ can be described as $a_{11}$ $c_{ij}$.

the threshold is 100. Then, the value of $c_{11}$ of the object value matrix 5 is 40 and is smaller than the threshold. Thus, the binarized signal is turned to "not to output", the error is 40. To the matrix elements $c_{12}$, $c_{21}$ and $c_{22}$ of the input pixels corresponding to the error diffusion range of $a_{12}$, $a_{21}$ and $a_{22}$, $c_{12} = 12$ ( $= 40 \times 3/(3 + 3 + 4)$), $e_{21} = 12$ ( $= 40 \times 3/(3 + 3 + 4)$), and $e_{22} = 16$ ( $= 40 \times 4/(3 + 3 + 4)$) are added respectively. As the result, the matrix 5 of the object value of the input multivalued color image is as given in Fig. 7. The value of the input pixel $a_{12}$ to be processed subsequently is 111 (as shown in Fig. 7) and is bigger than the threshold. Thus, the binarized signal is turned to "to output", and 11 is the error. To the input elements $c_{13}$, $c_{22}$ and $c_{23}$ corresponding to the error diffusion ranges $a_{13}$, $a_{22}$, and $a_{23}$, the new error fragments $e_{13} = 3$ ($= 11 \times 3/(3 + 4 + 4)$) $e_{22} = 4$ ( $= 11 \times 4/(3 + 4 + 4)$), and $e_{23} = 4$ ( $= 11 \times 4/(3 + 4 + 4)$) are added respectively. As the result, the matrix of the input multivalued color image is as given in Fig. 8. The same processing is performed to all input pixels in the order of main scanning and the secondary scanning, and the processing for one frame is completed.

Next, description is given on the second embodiment of the invention.

In Fig. 9, coefficient matrix 2a is obtained by rotating said coefficient matrix 2 by the angle $\alpha$, and 2b represents the coefficient matrix having the element $b_{ij}$ corresponding to the element $c_{ij}$ of the matrix 5 of the object value of multivalued input pixel of the color image. The value of $b_{ij}$ is equal to the value of $a_{rl}$, and the following relationship exists:

$$r = [i \cdot \cos(\alpha) - j \cdot \sin(\alpha)] \bmod m.$$

$$l = [i \cdot \sin(\alpha) + j \cdot \cos(\alpha)] \bmod n.$$

Here, [ ] indicates rounding process.

When the same processing as in the description of the first embodiment of the invention is performed using the coefficient matrix 2b rotating at different angles for each color instead of the coefficient matrix 2, the image in binary values with less moire and color difference due to the registering miss at output can be obtained.

[experimental examples]

In the following, the method according to this invention will be described in connection with experimental examples, whereas the present invention is not limited to the numeral values in the experimental examples.

[Experimental example 1]

With Fig. 10 as the multivalued information of the input taking the values within the range of 0 - 255, with the threshold at 255, with Fig. 11 as coefficient matrix, with the size of partial matrix of 4 × 4 and rotating angle of 0° , the binary image of Fig. 12 was obtained.

On the other hand, the image was reproduced through binarization according to the error diffusion method, using the same input data and the diffusion coefficient table of Fig. 13. The result is given in Fig. 14. As it is evident from the figure, the shape similar to dots can be obtained by the method of this invention.

(Experimental example 2)

With Fig. 10 as the multivalued information of the input taking the values within the range of 0 - 255, with the threshold as 255, with Fig. 11 as coefficient matrix, with the size of partial matrix of 4 × 4 and rotating angle of 30 ° , the binary image of Fig. 15 was obtained. It is also evident in this figure that the shape similar to dots can be obtained.

(Experimental example 3)

A transparent original was inputted using a scanner for prepress (Dainippon Screen Co., Ltd.,; SG-818), and binarization processing was performed by personal computer PC-9801 (NEC). The four binary value images were outputted on black-and-white sheets of film by a laser plotter (Scitex), and color image was reproduced by a proof press (DuPont). The results were approximately the same as that of the conventional type printing. In this case, the coefficient matrix was the same as given in Fig. 11, and the size of the partial matrix was 4 × 4. The coefficient matrix for each color was rotated by an angle shown in Fig. 16.

As a result, a binary value image with less moiré and color difference due to registration miss was obtained.

It is possible according to the present invention to obtain a method for color image information processing, which can provide high tone reproducibility and to give the processed image excellent image quality without using a threshold table.

When the 2-dimensional coefficient matrix of this invention having a period n · m is formed into a pyramid shape, where the values in the central part are larger than those in the surrounding as given in Fig. 17, the binary value image, consisting of dots having the period similar to that of a conventional type printing process using a contact screen could be obtained. With the coefficient appearing as a roof as given in Fig. 18 the effect similar to that of the printing using single-lined screen was obtained, and both moiré and color difference were extremely decreased.

**Claims**

**1.** A method for converting multivalued colour halftone image information to binary valued information using error diffusion, comprising the steps of defining a periodical error diffusion coefficient matrix having error coefficients $a_{i,j}$, such that $a_{i,j} = a_{i \bmod m, j \bmod n}$ for all $i$ and $j$, where $n$ and $m$ are predetermined integers;

assigning an error diffusion coefficient $a_{i,j}$ to a respective pixel $c_{i,j}$ of a multivalued colour halftone input image for all pixels in the input image:

binarizing the value of pixel $c_{i,j}$ by comparing $c_{i,j}$ to a threshold $T$, outputting a first binary value and diffusing an error $c_{i,j} - T$ when $c_{i,j} > T$ and outputting the other binary, value and diffusing an error $c_{i,j}$ when $c_{i,j} < T$, whereby said error diffusion is constituted by proportionally splitting the error for a pixel $c_{i,j}$ up into fractions and adding the values of the respective fractions to the values of respective neighbouring pixels,

characterized in that

the proportions of the respective fractions are determined by an error diffusion range consisting of a $p*q$ partial matrix of the error diffusion coefficient matrix, said partial matrix in said error diffusion coefficient matrix having a fixed relative position with regard to the pixel $c_{i,j}$ being converted.

2. A method according to claim 1, in which said error diffusion range consists of the coefficients $a_{w,z}$, where $i \le w \le i + p - 1$ and $j - \alpha + 1 \le z \le j - \alpha + q$, where $0 \le \alpha < q$, with the exception of the coefficients $a_{i,z}$ for which $z \le j$.

3. A method for color image information processing according to claim 1 or 2, wherein said coefficient matrix is rotated at a different angle for each color.

**Patentansprüche**

1. Verfahren zum Umwandeln einer vielwertigen Halbtonbildinformation in eine binärwertige Information unter Benutzung der Fehlerstreuung, die die folgenden Schritte umfaßt:

Definieren einer Fehlerstreukoeffizientenmatrix, die Fehlerkoeffizienten $a_{i,j}$ aufweist, so daß $a_{i,j} = a_{i \bmod m, j \bmod n}$ für alle i und j, wobei n und m vorherbestimmte ganze Zahlen sind;
Zuweisen eines Fehlerstreukoeffizienten $a_{i,j}$ auf einen jeweiligen Bildpunkt $c_{i,j}$ eines vielwertigen farbigen Halbtoneingabebildes für alle Bildpunkte des Eingabebildes;
Binärumwandlung des Wertes des Bildpunktes $c_{i,j}$ durch den Vergleich von $c_{i,j}$ mit einem Vorgabewert T, unter Ausgabe eines ersten Binärwertes und Streuung eines Fehlers $c_{i,j} - T$, wenn $c_{i,j} > T$, und unter Ausgabe eines anderen Binärwertes und
Streuung eines Fehlers $c_{i,j}$, wenn $c_{i,j} < T$, wobei diese Fehlerstreuung durch ein proportionales Aufteilen des Fehlers für einen Bildpunkt $c_{i,j}$ in Brüche dargestellt wird, und durch das Addieren der Werte der entsprechenden Brüche zu den Werten der entsprechenden benachbarten Bildpunkte,

**dadurch gekennzeichnet,**

daß die Verhältnisse der jeweiligen Brüche durch einen Fehlerstreubereich bestimmt sind, der aus einer p*q-Teilmatrix der Fehlerstreukoeffizientenmatrix besteht, wobei diese Teilmatrix in der Fehlerstreukoeffizientenmatrix eine feste relative Position zu dem Bildpunkt $c_{i,j}$ hat, der umgewandelt wird.

2. Verfahren nach Anspruch 1, wobei dieser Fehlerstreubereich aus den Koeffizienten $a_{w,z}$ besteht, wobei $i \le w \le i + p - 1$ und $j - \alpha + i \le z \le j - \alpha + q$, wobei $0 \le \alpha < q$, mit Ausnahme der Koeffizienten $a_{i,z}$ für die $z \le j$ ist.

3. Verfahren zum Bearbeiten einer Farbbildinformation nach Anspruch 1 und 2, wobei die Koeffizientenmatrix für jede Farbe mit einem unterschiedlichen Winkel gedreht wird.

**Revendications**

1. Procédé pour convertir des informations d'images couleurs demi-teinte à plusieurs valeurs en des informations à valeur binaire en utilisant la diffusion d'erreur, comprenant les étapes consistant à :

définir une matrice de coefficient de diffusion d'erreur périodique présentant les coefficients d'erreur $a_{i,j}$ tel que $a_{i,j} = a_{i \bmod m, j \bmod n}$, quels que soient i et j, n et m étant des entiers prédéterminés ;
attribuer un coefficient de diffusion d'erreur $a_{i,j}$ à un pixel respectif $c_{i,j}$ d'une image d'entrée couleur demi-teinte à plusieurs valeurs pour tous les pixels de l'image d'entrée ;
rendre binaire la valeur de pixel $c_{i,j}$ en comparant $c_{i,j}$ à un seuil T, en fournissant une première valeur binaire et en diffusant une erreur $c_{i,j} - T$ lorsque $c_{i,j} > T$ et en fournissant l'autre valeur binaire et en diffusant une erreur $c_{i,j}$ lorsque $c_{i,j} < T$, ladite diffusion d'erreur étant effectuée en fractionnant proportionnellement l'erreur pour un pixel $c_{i,j}$ en fractions et en ajoutant les valeurs des fractions respectives aux valeurs des pixels voisins respectifs, caractérisé en ce que :

les proportions des fractions respectives sont déterminées par un éventail de diffusion d'erreur consistant en une matrice partielle p*q de la matrice de coefficient de diffusion d'erreur, ladite matrice partielle de ladite matrice de coefficient de diffusion d'erreur ayant une position relative fixe par rapport au pixel $c_{i,j}$ converti.

2. Procédé selon la revendication 1, dans lequel ledit éventail de diffusion d'erreur consiste en des coefficients $a_{w,z}$, où $i \leq w \leq i + p$ et $j - \alpha + 1 \leq z \leq j - \alpha + q$, et $0 \leq \alpha < q$, à l'exception des coefficients $a_{i,z}$ pour lesquels $z \leq j$.

3. Procédé pour traiter des informations d'images couleurs selon la revendication 1 ou 2, dans lequel ladite matrice de coefficient tourne d'un angle différent pour chaque couleur.

# FIG. I

$a_{11}$ $a_{12}$ $a_{13}$ ... $a_{1m}$ $a_{11}$ $a_{12}$ $a_{13}$

$a_{21}$ $a_{22}$ $a_{23}$ ... $a_{2m}$ $a_{21}$ $a_{22}$ $a_{23}$

$a_{31}$ $a_{32}$ $a_{33}$ ... $a_{3m}$ $a_{31}$ $a_{32}$ $a_{33}$

$a_{n1}$ $a_{n2}$ $a_{n3}$ ... $a_{nm}$ $a_{n1}$

$a_{11}$ $a_{12}$ $a_{13}$ ... $a_{1m}$ $a_{11}$

$a_{21}$ $a_{22}$ $a_{23}$

m

n

U

V

1

2

EP 0 418 844 B1

# FIG. 2

EP 0 418 844 B1

# FIG. 3

EP 0 418 844 B1

## F I G. 4

## F I G. 5

## F I G. 6

## F I G. 7

## F I G. 8

# F I G. 9

# F I G. 10

# FIG. 11

| | | | | | | | |
|---|---|---|---|---|---|---|---|
| 60 | 52 | 40 | 24 | 32 | 51 | 59 | 63 |
| 56 | 44 | 28 | 12 | 20 | 39 | 47 | 55 |
| 48 | 36 | 16 | 4 | 8 | 19 | 31 | 43 |
| 33 | 21 | 11 | 0 | 3 | 6 | 15 | 27 |
| 25 | 13 | 7 | 1 | 2 | 10 | 23 | 35 |
| 41 | 29 | 17 | 9 | 5 | 18 | 38 | 50 |
| 53 | 45 | 37 | 22 | 14 | 30 | 46 | 58 |
| 61 | 57 | 49 | 34 | 26 | 42 | 54 | 62 |

# F I G. 12

# F I G. 13

# F I G. 14

# F I G. 15

# F I G. 16

| CYAN | 17.5° |
|---------|-------|
| MAGENTA | 77.5° |
| YELLOW | 2.5° |
| BLACK | 47.5° |

# F I G. 17

# F I G. 18